# EUROPEAN PATENT APPLICATION

(11) **EP 1 364 932 A1**
(43) Date of publication of application: **26.11.2003**
(21) Application number: 02100556.6
(22) Date of filing: 23.05.2002
(51) Int. Cl.: C07B 53/00, C07F 15/00

(54) **Process for the preparation of enantiomerically enriched compounds**

(71) Applicant: DSM IP Assets B.V., 6411 TE Heerlen (NL)
(72) Inventor: MINNAARD, Adriaan, Jacobus, 9801 BB, Zuidhorn (NL); FERINGA, Ben, 9765 EP, Paterswolde (NL); IMBOS, Rosalinde, 9713 XR, Groningen (NL)
(74) Representative: Jacobs, Monique S.N.

(57) **Abstract**

Process for the preparation of enantiomerically enriched compounds with formula Ar - C(R¹) - C(R²) - Z wherein Ar represents an optionally substituted (hetero)aryl group, R¹ and R², each independen tly, represent H, an alkyl, (hetero)aryl, dialkylamino, amido, thioether, alkoxy or aryloxy group with the proviso that not both R¹ and R² represent H, or R¹ and R² form together with the C-atoms to which they are bound a (hetero)alkyl or (hetero) alkenyl ring and Z represents an electron withdrawing group, in which process a boronic acid derivate of formula Ar - B(OR³)OR⁴ or its anhydride, wherein Ar is as described above and R³ and R⁴, each independently, represent H or an alkyl group, is reacted with an olefinic unsaturated compound with formula R² - C = C - (R¹)Z, wherein R¹, R² and Z are as described above, in the presence of a transition metal catalyst comprising a transition metal chosen from Cu and group VIII of the Periodic Table and an enantiomerically enriched ligand L, having the formula (I) where Cₙ together with the two O-atoms and the P-atom forms a substituted or non-substituted ring with 2-6 C-atoms, R⁵ and R⁶ each independently stand for H, an optionally substituted alkyl, aryl, alkaryl or aralkyl group, or represent the group with formula (II) wherein Cₙ¹ may have the same meanings as given for Cₙ and B represents a bridging group, or R⁵ and R⁶ may form a heterocyclic ring together with the N-atom to which they are bound.

## Description

The invention relates to a process for the preparation of enantiomerically enriched compounds with formula Ar - C(R¹) - C(R²)- Z wherein Ar represents an (hetero)aryl group, R¹ and R², each independently, represent H, an alkyl, (hetero)aryl, dialkyl-amino, amido, thioether, alkoxy or aryloxy group with the proviso that not both R¹ and R² represent H, or R¹ and R², or R¹ and Z or R² and Z form together with the C-atoms to which they are bound a (hetero)alkyl or (hetero)alkenyl ring with, for instance, 2-20 C-atoms and Z represents an electron withdrawing group, in which process a boronic acid derivate of formula Ar - B(OR³)OR⁴ or its anhydride, wherein Ar is the same as described above and R³ and R⁴, each independently, represent H or an alkyl group with, for instance, 1-6 C-atoms, is reacted with an olefinic unsaturated compound with formula R¹ - C = C - (R²) Z, wherein R¹, R² and Z are the same as described above, in the presence of a transition metal catalyst comprising a transition metal chosen from the group consisting of Cu and groups 8, 9 and 10 of the Periodic Table and an enantiomerically enriched ligand L..

Rhodium catalyzed asymmetric 1,4 addition of organoboronic acids to olefins is described by Hayashi in Synlett 2001, No. Sl, 879-887, wherein use is made of Binap as enantiomerically enriched ligand, and by M. Reetz in Org. Lett., 2001, 3, 4083-4085 wherein use is made of BINOL-based diphosphonites.

A drawback of the known process is that the reaction is rather slow and thus a higher reaction temperature and/or a longer reaction time is required.

The present invention now provides a process for the asymmetric arylation of olefinic unsaturated compounds with higher reaction rate.

This is reached according to the invention by using as the ligand L an enantiomerically enriched ligand having the formula (I) 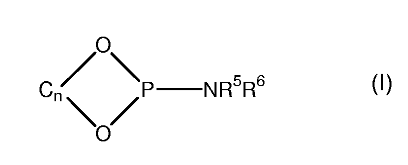 where Cₙ together with the two O-atoms and the P-atom forms a substituted or non-substituted ring with 2-6 C-atoms, R⁵ and R⁶ each independently stand for H, an optionally substituted alkyl, aryl, alkaryl or aralkyl group, or represent the group with formula (II) 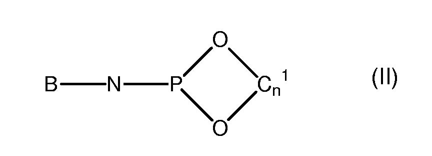 wherein Cₙ¹ may have the same meanings as given for Cₙ throughout the whole specification and B represents a bridging group or R⁵ and R⁶ may form a heterocyclic ring together with the N-atom to which they are bound. The enantiomerically enriched ligands may thus be mono-, bi or tridentate ligands. Preferably monodentate ligands are used when arylated products with high ee are aimed at.

An additional advantage of the process of the present invention is that as a rule the ligands L can be simply prepared in one or two steps from commercially available starting materials.

Using a catalyst according to the invention in the asymmetric arylation of an olefinic unsaturated compound, enantiomerically enriched compounds can be obtained with an ee of > 60%, in particular > 80%, more in particular > 95%.

The alkyl, aryl, aralkyl and alkaryl groups in R⁵ and R⁶ preferably have 1-20 C-atoms and can optionally be substituted with, for instance, one or more keto, hydroxy, alkoxy, nitrile or carboxylic ester groups, or halogens. Preferably R⁵ and R⁶ each independently represent an alkyl group, for instance an alkyl group with 1-6 C-atoms, in particular 1-3 C-atoms, most preferably R⁵ and R⁶ represent a methyl group. R⁵ and/or R⁶ may be part of a polymeric backbone.

The bridging group B may be for example CO, an alkylene, alkenylene, arylene, naphtalene or heteroarylene group, or a combination thereof, with, for instance, 1-20 C-atoms, preferably 1-8 C-atoms. The alkylene, alkenylene, arylene, naphtalene or heteroarylene group may contain one or more heteroatoms, for instance N, O, P or S, and/or be substituted with one or more substituents that are inert in the reaction system. Suitable substituents, having preferable 0 - 60 C-atoms, are for instance alkyl, aryl, alkoxy, keto, aryloxy, ester, ether, nitrile, amido or carbamate groups. Each pair of substituents may form together with the C-atoms to which they are bound, a 4-8 membered ring which may be fused with other rings. Suitable examples of B are CO, oxalyl, maleyl, succinyl, 1,2-ethylene, 1,2-propylene, 1,3-propylene, 1,4-butylene, 1,2-cyclopropylidene, 1,2-cyclobutylidene, 1,3-cyclobutylidene, 1,2 cyclopentylidene, 2,3-norbornylidene, 2,5-norbornylidene, *ortho-, meta- or para*-phenylene, 1,2 furylidene, -(CH₂ CH₂O CH₂ CH₂)-, esters of lysine or ornithine. The bridging group may be chiral or non-chiral.

The transition metal catalyst used according to the invention comprises a transition metal chosen from the group consisting of Cu and group 8, 9 and 10 of the Periodic Table, according to the new IUPAC notation as represented in the Table given in the cover of the Handbook of Chemistry and Physics, 70^{th} Edition, CRC Press, 1989-1990, for instance Rh, Ru, Ir, Pt, Pd or Cu, preferably Rh or Ir. The catalyst according to the invention may consist of a preformed complex or may be prepared in situ. A suitable catalyst may be prepared for instance by combining the enantiomerically enriched ligand with a catalyst precursor.

The catalyst precursor may be for instance in the form of a metal, or a salt, a complex or a cluster of the metal, or oligomeric or polymeric forms of the metal or the salt, complex or cluster thereof. Preferably, the catalyst precursor is a complex, for instance represented by the formula MXₐS_{b}, wherein a and b each independently are between and including 0-5.

S represents an extra ligand which may be present or not and which may be chiral or non chiral. Suitable ligands S are olefins, for example maleic anhydride or ethylene; dienes, for example 1,5-cyclooctadiene, 1,3-butadiene and 2,5-norbornadiene; aromatics, for example benzene, hexamethyl benzene, cymene and cumene, eta-5 coordinated cyclopentadienyl ligands, for example cyclopentadienyl and pentamethyl-cyclopentadienyl; or CO, or a solvent, for instance acrylonitrile.

The counter ion X may be an anion or a cation. Examples of suitable anions are Cl, Br, I, OAc, BF_{4,} PF₆, SbF₆, ClO₄, p-toluene sulphonate, benzene phosphonate, tetra-pentafluorophenylborate, or, preferably, optionally substituted acetylacetonate (acac). If the catalyst is anionic, X is a cation. Examples of suitable cations are alkaline metals, for example Li, Na or K, alkaline earth metals such as Mg or Ca, or ammonium, or alkyl-substituted ammonium.

The catalyst may be formed *in situ* by adding the enantiomerically enriched ligand to a solution of a catalyst precursor. Preferably, the catalyst precursor and the enantiomerically enriched ligand are stirred together in solution for a certain period that may range from a few minutes to several hours, for instance 5 to 30 minutes, before contacting with the reactants. In general 10-20 minutes will be sufficient. It is also possible to combine the catalyst precursor and the chiral ligand. Next, after stirring for a certain period, the solvent is removed by evaporation or by filtration. Subsequently the residue may be dissolved in the same or a different solvent. The catalyst may optionally be added in dimeric form, with the dimeric form subsequently wholly or partly changing in situ into the monomeric form.

The amount of enantiomerically enriched monodentate ligand to be added for example may range from 0.5 to 5, preferably from 2 to 4, equivalents relative to the metal. The amount of enantiomerically enriched bi- or tridentate ligand to be added for example may range from 0.25 to 2, preferably from 0.6 to 1.2. Preferably a small excess of optically active ligand is applied relative to the desired amount of optically active ligand in the catalyst. The optimum ratio of optically active ligand to metal in the catalyst may differ per optically active ligand and per metal and can readily be determined by means of experiments. It may be advantageous to adjust the oxidation state of the catalyst by adding a reducing agent, such as NaBH₄, Zn or a Grignard reagent.

Examples of suitable catalyst precursors, which together with the chiral ligand form the catalyst, are (acac = acetylacetonate, COD = 1,5 cyclooctadiene; COE = cyclooctene, nbd = norbornadiene L = ligand I of the invention, S = a ligand as defined above, n=0-12): [Rh(acac)(C₂H₄)₂], [Rh(acac)(COE)₂], [Rh (COD)Cl]₂, [Rh(COD)(MeCN)₂]BF₄, [Rh(COD)₂]BF₄, (Rh(nbd)₂]BF₄, [Rh(acac)(CO)₂], [Rh(nbd)₂]ClO₄, Ir(acac)(CO)₂, [Ir(COD)Cl]₂, [Ir(COD)₂]X (X = BF₄, PF₆, ClO₄, SbF₆, CF₃SO₃, B(C₆F₅)₄), [Ru(COD)Cl₂]ₙ, [Ru(Cymene)Cl₂]₂, Ni(acac)₂.nH₂O, Ni(COD)₂, Pd(OAc)₂, Pd(PhCN)₂Cl_{2,} PtCl₂, Pt(acac)₂, Pt(COD)Cl₂, Cul, CuOTf, Cu(OAc)₂, Cu(CH₃CN)₄PF₆, Cu(acac)₂.nH₂O, Cu(CF₃COCHCOCF₃)₂.nH₂O, Co(OAc)₂.nH₂O, Co(acac)₂,

Examples of preformed complexes are [RhL₂(acac)], Rh(COD)L₂BF₄, RuL₂(OAc)₂, RuL₂Br₂, Ru(methylallyl)₂L₂, Ru(eta-6-benzene)L₂Br₂, Ru(eta-5-cyclopentadienyl)L₂Cl, RuLSCl₂, Ru(1,2-diphenyl-1,2-diaminoethane)LCl₂, IrL₂(CH₃OH)₂PF₆, Ir(COD)L₂BF₄, CuL₃I. In case the ligand is bidentate L₂ becomes L in these preformed complexes.

Specifically preferred catalysts are the catalysts comprising a transition metal M, an enantiomerically enriched ligand L, an extra ligand S and a counterion X wherein M is Rh, S is (C₂H₄)₂, X is acetylacetonate and L is a ligand with formula I 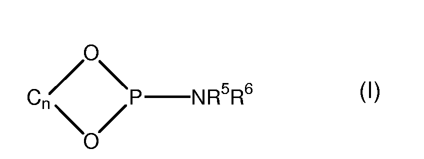 where Cₙ together with the two O-atoms and the P-atom forms a substituted or non-substituted ring with 2-6 C-atoms, R⁵ and R⁶ each independently stand for H, an optionally substituted alkyl, aryl, alkaryl or aralkyl group, or represent the group with formula (II) 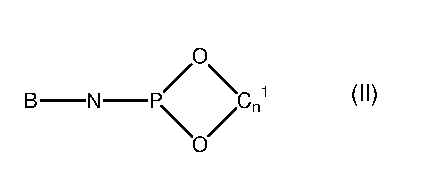 wherein Cₙ¹ may have the same meanings as given for Cₙ and B represents a bridging group, or R⁵ and R⁶ may form a heterocyclic ring together with the N-atom to which they are bound. The invention, therefore, also relates to such catalysts.

In the enantiomerically enriched ligand L of formula (I) Cₙ and/or R⁵ and/or R⁶ are chiral or are part of a chiral entity. Cₙ preferably represents a chiral substituted C₄ chain (chain with 4 optionally substituted C-atoms), of predominantly one configuration, for example with an enantiomeric excess larger than 95%, in particular larger than 99%, more in particular larger than 99.5%. Cₙ may be substituted with one or more substituents that are inert in the reaction system. Suitable substituents preferably have 0-60 C-atoms. Examples of such substituents for Cₙ are, for instance alkyl, aryl, alkoxy, aryloxy, (unsaturated) ester, ether, nitrile, nitro,amido or carbamate groups, CF₃ or halogens. Each pair of substituents may form together with the C-atom(s) to which they are bound, a 4-8 membered ring which may be fused with other rings. Preferably Cₙ together with the two O-atoms and the P-atom forms a 7-membered ring with 4 C-atoms which 2 by 2 form part of an (hetero)aryl group or a naphthyl group. Examples of suitable enantiomerically enriched ligands according to the invention are

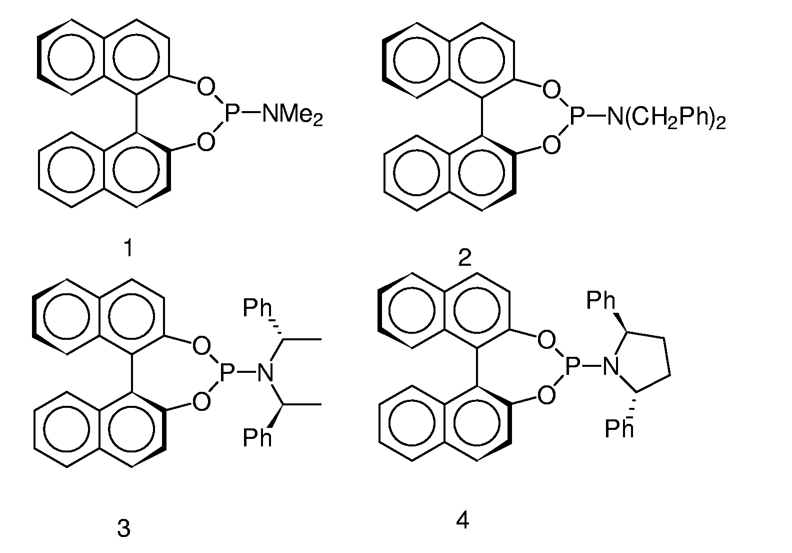

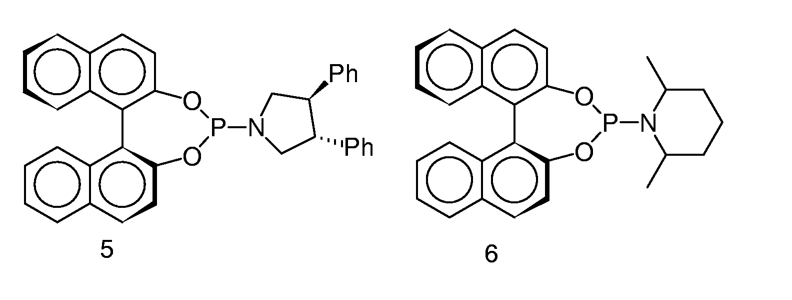

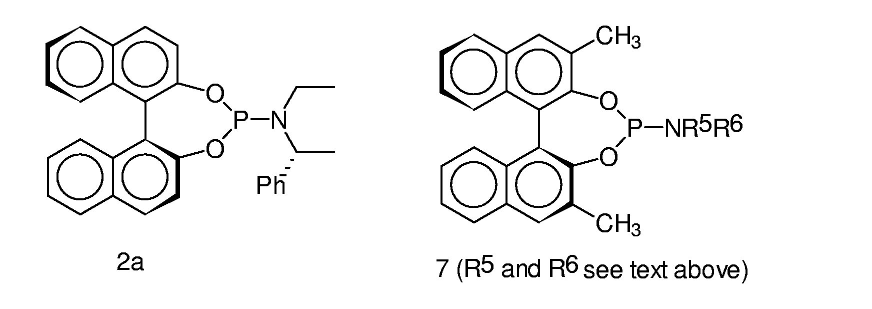

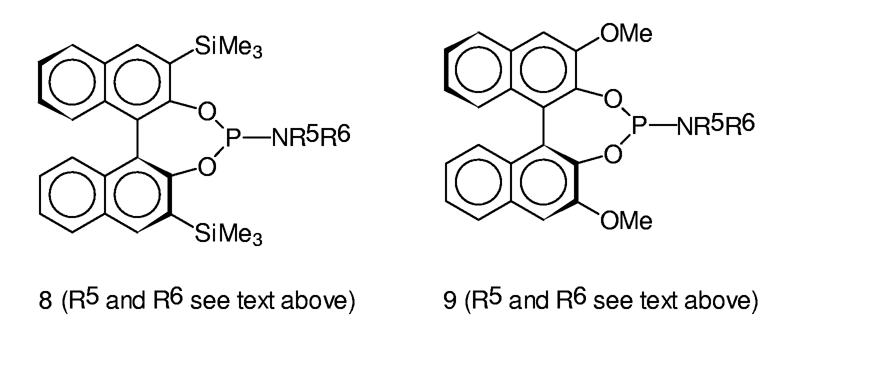

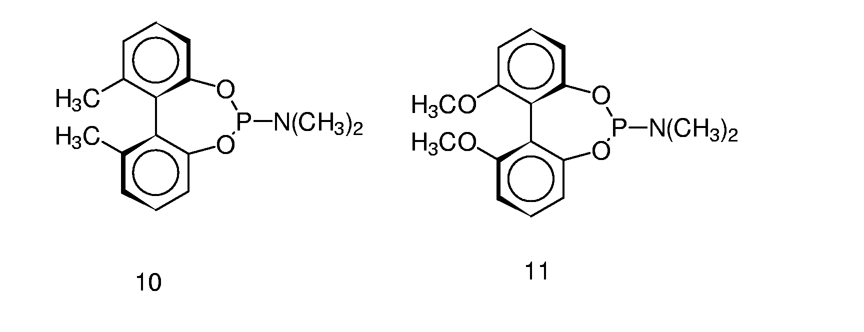

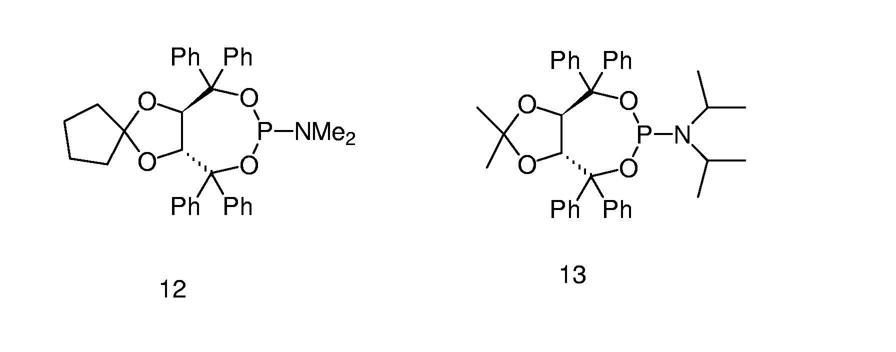

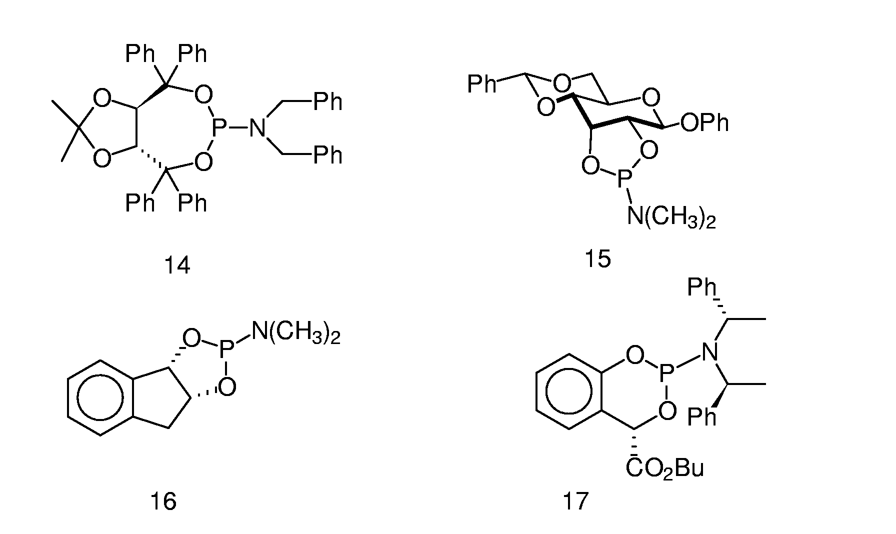

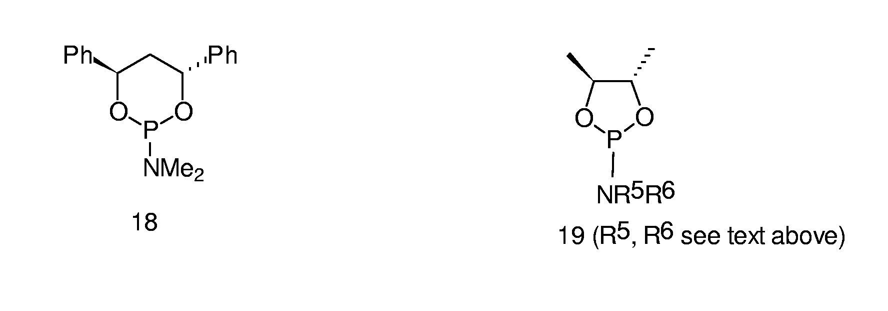

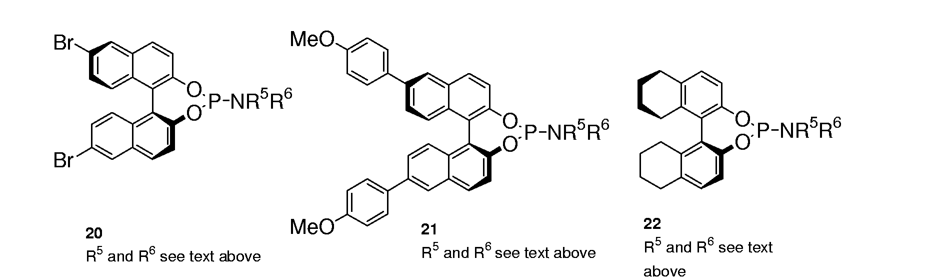

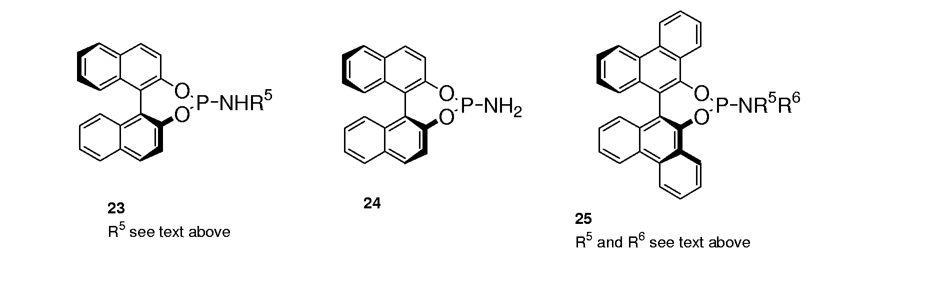

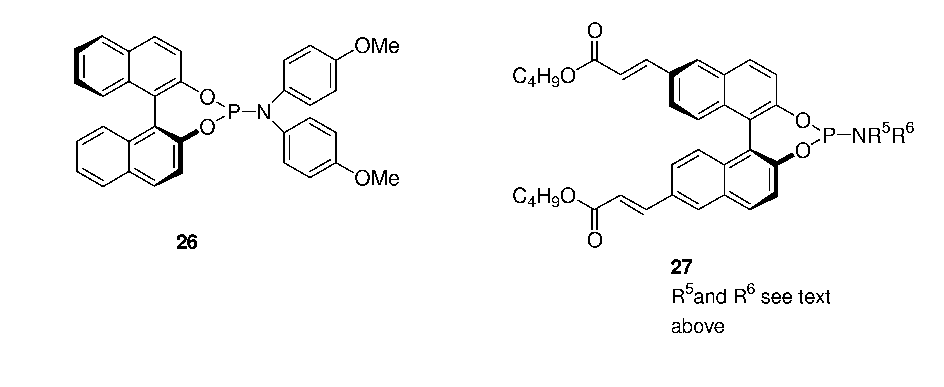

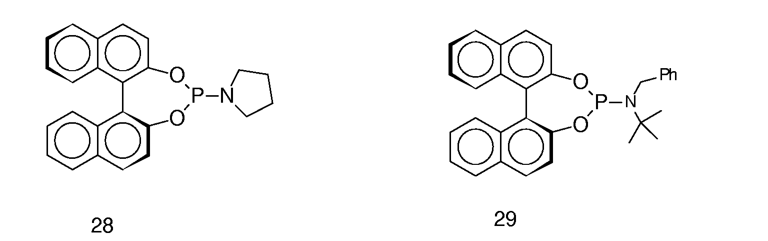

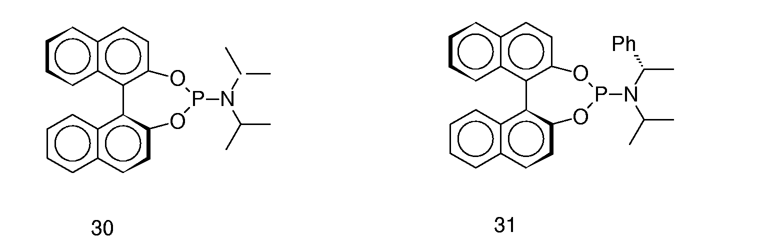

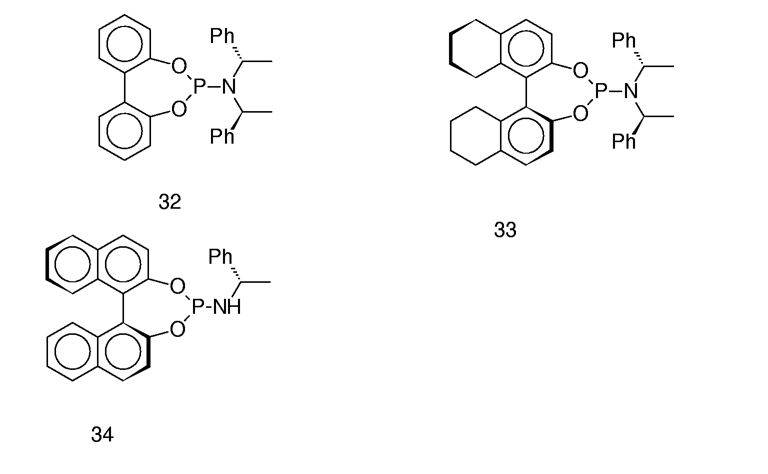

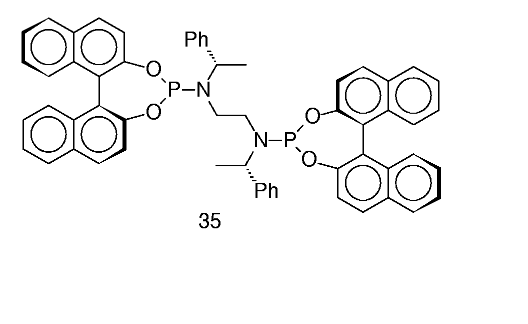

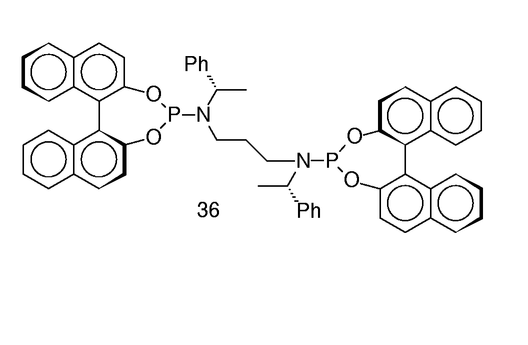

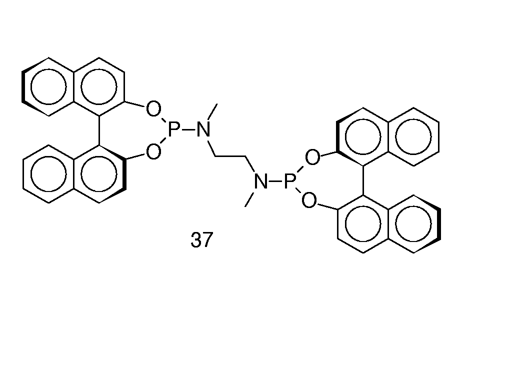

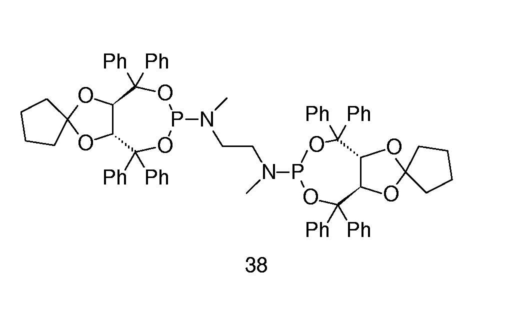

It will be understood that where one enantiomer is represented, the other enantiomer is similarly applicable.

Such ligands with formula (I) can simply be prepared as described for example in *Houben-Weyl Methoden der Organischen Chemie Band XII*/*2. Organische phosphorverbindungen*. G. Thieme Verlag, Stuttgart, 1964, Teil 2 (4th ed.), pp. 99-105. A preferred preparation method is based on the reaction of an HO-Cₙ-OH compound with P(NMe₂)₃ or P(NEt₂)₃ (Me = methyl, Et = ethyl), with subsequent reaction with R⁵R⁶NH, preferably in a solvent having a boiling point > 80 °C, for example toluene. Examples of suitable catalysts for the latter reaction are ammonium chloride, tetrazole or benzimidazoliumtriflate. Examples of HO-Cₙ-OH are chiral bisnaphtols for example *(R)-* or (*S*)- 1,1'-bi-(2-naphthol), chiral bisphenols for example *(R)-* or (*S*)- 6,6'-dimethoxy-2,2'-bisphenol, diols, for example *(R,R)-* or (*S,S*)-2,2-dimethyl-1,3-dioxolane-4,5-bis-(1,1-diphenyl)methanol (TADDOL), or (*S,R*) or (*R,S*)-indane-1,2-diol; 1,2-diols and 1,3-diols based on sugars, for example diols having the formula:

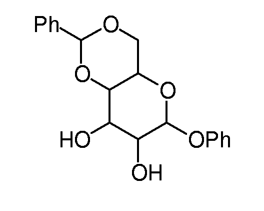

Examples of R¹R²NH are benzyl amine, dibenzyl amine, diisopropyl amine, *(R)-* or (*S*)-1-methyl-benzyl amine, piperidine, morpholine, (*R,R*)*-* or (*S,S*)-bis-(1 -methylbenzyl)amine.

A second preferred preparation is based on the reaction of an HO-Cₙ-OH compound with PCl₃, with subsequent reaction with R⁵R⁶NH, preferably in the presence of a base, for example Et₃N, and in the presence of a solvent, for example toluene. Examples of HO-Cₙ-OH are in principle the same as mentioned above in relation to the first preferred preparation. Examples of R⁵R⁶NH are ammonia, benzyl amine, dibenzyl amine, diisopropyl amine, *(R)-* or (*S*)-1-methyl-benzyl amine, piperidine, morpholine, (*R,R*)- or (*S,S*)-bis-(1-methylbenzyl)amine.

The bi- or tridentate ligands of the invention may be prepared in similar fashion, by replacing the amine R⁵R⁶NH with a bridged diamine compound (R⁶)HN-B-NH(R⁶). It is also possible to prepare non-symmetrical bidentate phosphoramidite ligands. This can be accomplished by reacting a group (R⁶)NH-BNH(R⁶) first with 1 equivalent of 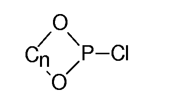 After this reaction the remaining amino group is reacted with 1 equivalent of 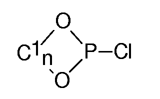 The invention also relates to the preparation of the enantiomerically enriched ligands of formula I.

Suitable substrates for the asymmetric arylation reaction are unsaturated compound with formula R¹ - C =C - (R²)Z, wherein R¹ and R², each independently, represent H, an alkyl, (hetero)aryl, dialkylamino, amido, alkoxy, aryloxy or thioether group with, for instance 1-20 C-atoms (including any substituents) with the proviso that not both R¹ and R² represent H, or R¹ and R² form together with the C-atoms to which they are bound a (hetero)alkyl or (hetero)alkenyl ring with, for instance, 2-20 C-atoms including any substituents, or R¹ and Z, or R² and Z form together with the C-atom(s) to which they are bound a ring, preferably a 5-12 membered ring, for instance a cyclic ketone, a lactone or a lactam. Examples of R¹ and R² are: hydrogen, alkyl groups, for example methyl, ethyl, isopropyl, butyl; (hetero)aryl groups, for example phenyl, 4-biphenyl, 1-napthyl, 2-naphthyl, 2-furyl, 3-furyl, 2-indenyl, 2-indolinyl or 2-quinolinyl; disubstituted amine groups for example dimethylamino, dibenzylamino, methylbenzylamino, methylanilinyl, *N*-piperidinyl or *N*-pyrrolyl, or *N*-pyrrolidinyl or *N*-morpholinyl; amide groups, for example aminocarbonyl, ethylaminocarbonyl, dimethylaminocarbonyl or benzylaminocarbonyl; thioether groups for example methylmercapto, benzylmercapto, phenylmercapto; alkoxy groups, for example methoxy, ethoxy, benzyloxy; or (hetero)aryloxy groups for example phenoxy, 2-fluorophenoxy or 2-furanyloxy. R¹ and/or R² are optionally substituted with one or more substituents that are inert in the reaction system. Suitable substituents preferably have 0-60 C-atoms. Examples of such substituents for R¹ and R² are for example halogens; alkyl groups with for instance 1-10 C-atoms, aryl groups with for example 1-10 C-atoms, for instance phenyl, alkoxygroups with for instance 1-10 C-atoms, aryloxygroups with for instance 6-10 C-atoms, (unsaturated) ester, ether, nitrile, nitro, amido or catbamate groups, and Z represents an electron withdrawing group. Suitable examples of Z are ester groups for example a methoxycarbonyl, ethoxycarbonyl, isopropoxycarbonyl, benzyloxycarbonyl, phenoxycarbonyl or a 2-methoxyethoxycarbonyl group; amide groups for example aminocarbonyl, ethylaminocarbonyl, dimethylaminocarbonyl or benzylaminocarbonyl; acyl groups, for example acetyl, propionyl, benzoyl, 1-naphthoyl, 2-naphthoyl, 2-picolyl, 4-phenylbenzoyl, 4-nitrobenzoyl or m-fluorobenzoyl; a nitro group or a nitrile or a phosphonate ester, for example dietyl phosphonate or dibenzylphosphonate, sulfoxides for example methylsulfinyl or phenylsulfinyl; a sulfone, for example methylsulfonyl or phenylsulfonyl, 2-naphthylsulfonyl or 2-furylsulfonyl. It is understood that all the above mentioned groups may carry further substituents.

Examples of substrates are *Z* and *E* isomers of 2- and/or 3-substituted acrylate esters, for example methyl methacrylate, propyl 2-pentenoate, butyl crotonate, ethyl itaconate or butyl cinnamate; alpha-beta-unsaturated lactones, for example as delta 2-butenolactone or epsilon 2-pentenolactone; cyclic anhydrides, for example maleic anhydride or 2-methyl maleic anhydride; alpha-beta unsaturated amides, for example crotylamide or cinnamide, or alpha-beta unsaturated lactams, for example *N*-benzyl 5,6-dihydro-2- (1*H*)-pyridinone or 5,6-dihydro-2- (1*H*)-pyridinone, nitro-olefins, for example 2-nitro-propene or 1-nitro-cyclohexene; alpha-beta unsaturated ketones, for example methyl vinyl ketone, 3-nonen-2-one or 5-methyl-3-hexen-2-one, cyclic enones, for example 2-cyclopentenone, 2-cyclohexenone, 2-cycloheptenone or 5,6-dihydro-4 (1*H*)-pyridinone; alpha beta unsaturated nitriles, for example crotonitrile or methacrylonitrile or 2-cyanocyclopentene, alpha-beta unsaturated phosphonates, for example diethyl 1-propenephosphonate or dimethyl 1-cyclohexenephosphonate; 1,2-dehydro amino acid derivatives, for example methyl 2-acetamido-acrylate, ethyl 2-N-benzyloxycarbamoyl-cinnamate.or ethyl 3-acetamidocinnamate.

The arylating agent is a boronic acid derivate of formula Ar - B(OR³)OR⁴ or its anhydride, wherein R³ and R⁴, each independently, represent H or an alkyl group with for instance 1-6 C-atoms, for example methyl, ethyl, propyl or together with the BO₂ form a ring with for instance 1-6 C-atoms, in which case R³R⁴ may represent, for instance, ethylene, propylene or 2,3-dimethyl 2,3-butylene. Ar represents an (hetero) aryl group with, for instance, 3-20 C-atoms, preferably 4-10 C-atoms. Suitable examples of Ar are phenyl, (*o-, m- or p-*) nitro-phenyl, (*o-, m- or p-*) chlorophenyl, (*o-, m- or p-*) tolyl, (*o-, m- or p-*) trifluoromethyl-phenyl, (*o-, m- or p-*) anisyl, (*o-, m- or p-*) hydroxyphenyl, (*o-, m- or p-*) cyano-phenyl, (*o-, m- or p-*) methoxycarbonyl-phenyl, xylyl, mesityl, 1-naphthyl, 2-naphthyl, 6-methoxynaphthyl, phenanthryl, anthracyl, (2-, 3-,or 4-) pyridyl, (2-, 3-, 4-, 5-, 6-, 7- or 8-,) quinolyl, (1-, 3-, 4-, 5-, 6-, 7- or 8-,) isoquinolyl, 2- or 3-furyl, 2- or 3-thienyl, 2- or 3-pyrrolyl, (2-, 3-, 4-, 5-, 6-, or 7-,) indolyl. It is understood that all these aryl groups may be substituted with one or more substituents.

The preparation of the aromatic boronic acids is described by R. Köster in "Houben-Weyl Methoden der Organischen Chemie" Vol 13/3a, R Köster ed., Georg Thieme Verlag, Stuttgart, 1982, p 489-852.
A particular convenient method is to react an aromatic halide such as ArCI or ArBr with Mg turnings to prepare the Grignard reagent. Addition of a boronic ester such as B(OMe)₃ and hydrolysis with water after the Grignard has fully reacted with the boronic ester will furnish the aromatic boronic acids in good yield. Purification is by crystallization from a suitable solvent.

In a preferred embodiment of the invention the aryl boronic derivative (or its anhydride) is prepared from ArMgBr, wherein Ar is as defined above, and a boron ester with formula B(OR)₃, wherein R represents an alkyl group, preferably with 1-6 C-atoms, in particular methyl. Preferably the boronic acid derivative obtained is subsequently in the same pot, without purification or isolation subjected to the reaction with the olefinic unsaturated compound with formula R²-C=C-(R¹)Z, according to the invention.

The process according to the invention can also suitably be used in the preparation of an optically active compound, starting from (a mixture of the enantiomers of an) olefin, that contains a chiral centre elsewhere in the molecule and with preferably one of the two enantiomers being arylated.

In the arylation reaction use is preferably made of a molar ratio of metal present in the catalyst to substrate of between 1:10 and 1:1,000,000, in particular between 1:50 and 1:100,000. The ratio boronic acid to olefinic unsaturated compound may vary between wide limits, for instance between 0.8 and 10, preferably between 1.0 and 5. The arylation reaction allows for a relatively low ratio boronic acid to olefinic unsaturated compound. Preferably a ratio between 1 and 2 equivalents boronic acid to olefinic unsaturated compound.

The temperature at which the asymmetric arylation reaction is carried out is generally a compromise between reaction velocity and enantioselectivity, and preferably lies between 0 and 140°C, in particular between 20 and 100°C. The asymmetric arylation reaction is preferably carried out with oxygen being excluded. Preferably the substrates and solvents do not contain any oxygen, peroxides or other oxidizing substances.

As solvent use can be made of: alcohols, for instance methanol ethanol or isopropanol; esters for instance ethylacetate or butyl acetate; amides for instance DMF, NMP or DMA; ethers, for instance diethyl ether, terahydrofuran, DME, or dioxane; ketones, for instance acetone, butanone or cyclohexanone, aromatic hydrocarbons, for instance toluene, halogenated hydrocarbons, for instance chlorobenzene or water. In case water is used as solvent it may be beneficial to add a phase transfer agent, for instance sodium dodecyl sulfate. If desired the solubility of the catalyst in water can be increased by providing the ligand with polar groups, for instance carboxylate or sulfonate salts. It usually is beneficial to add a small amount of water to the other solvents, preferably in an amount of one or more equivalents, more preferably 1-20 equivalents, with respect to the amount of boronic acid. Good results are obtained when a water/dioxane mixture was used with a dioxane/water ratio between 5:1 and 20:1. It is also possible to carry out the arylation reaction in ionic liquids as described in T. Welton, *Chem. Rev.,* **99,** 2071-2083 (1999), so that isolation of the product is simplified. If necessary the solubility of the ligand in the ionic liquid can be increased by providing the ligand with polar groups such as carboxylate salts. If the substrate is a liquid, the arylation reaction can also very suitably be carried out without a solvent; in this case water needs to be added as described above. If the substrate and/or the product hardly dissolves in the solvent the asymmetric arylation can also be performed as a slurry. If the product forms a slurry, its isolation is very much simplified.

The asymmetric arylation reaction will sometimes also be accelerated by adding a base. Suitable bases are nitrogen bases for instance triethylamine, substituted or non-substituted pyridines and mineral bases for example NaHCO₃, K₂CO₃, KOtBu or Cs₂CO₃.

The invention will be elucidated with reference to the following examples, without however being restricted by these.

### Example 1

A Schlenk tube under Argon was charged with Rh(acac)(C₂H₄)₂ (3.1 mg 12µmol), enantiopure ligand **1**(2.5 equiv) and 1 mL of dry dioxane. This was stirred at ambient temperature for 10 min. 2-Cyclohexenone (0.4 mmol), 2 mmol of PhB(OH)₂ and 0.1 ml of H₂O was added and the mixture was then stirred at 100°C for 5h, cooled to room temperature. 5 ml of sat. NaHCO₃ was added and the mixture was extracted with EtOAc or diethylether (2x 5 ml). The organic layers were dried on Na₂SO₄ and the solvents were evaporated. 2 ml of Heptane/isopropylalcohol(IPA) 90/10 was added and the solution was filtered over a short SiO₂ column. The resulting solution was analysed by NMR and HPLC or GC.

### Examples 2-4

Example 1 was repeated using ligand 2, 28 and 30, respectively, the results are listed in table 1.

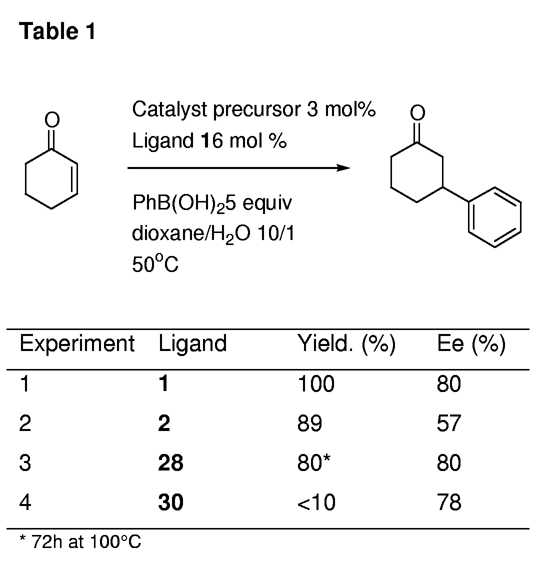

### Examples 5-11

In examples 5-11 the same procedure was followed as in Example 1, but the solvents were changed. Results are listed in Table 2.

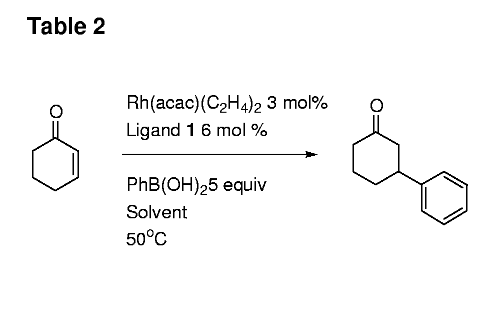

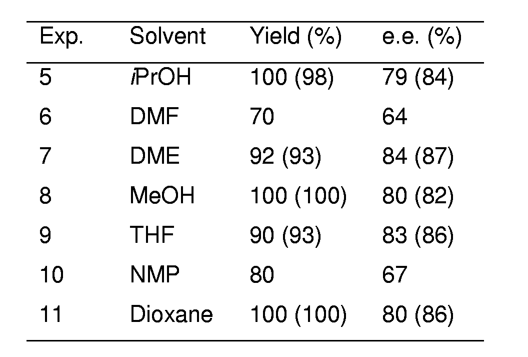

The values within parentheses were obtained when a ligand rhodium ratio of 2.5 was used.

### Example 12

The same conditions were applied as in example 1 except that Rh(nbd)BF₄ was used as a catalyst precursor 3-Phenyl-cyclohexanone was obtained with an ee of 80% and with 13% yield.

### Examples 13-16

Example 1 was repeated now using different arylboronic acids. The results are listed in Table 3.

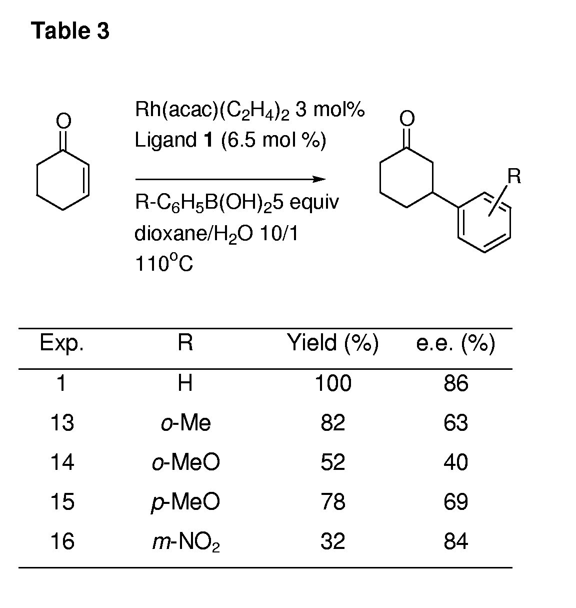

### Example 17

Example 1 was repeated with other olefinic substrates. The results are listed in Table 4.

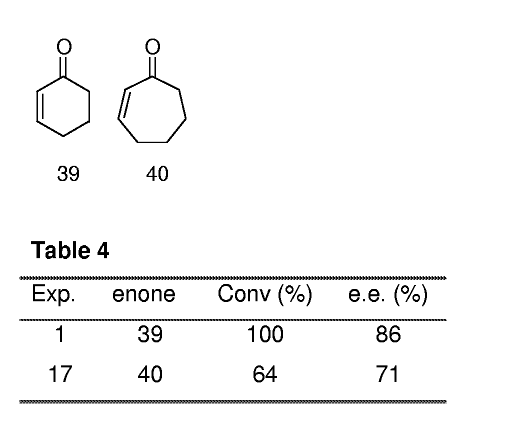

### Example 18

The experiment as described in Example 1 was repeated but using ligand **22** (R⁵ and R⁶ are both Me). After 1 h complete conversion was obtained. The e.e. of the 3-phenylcyclohexanone was 88%.

### Example 19

### Large-scale experiment

This experiment was conducted in a similar fashion as experiment 1. In it we used 2.00 g (21 mmol) of cyclohexenone, 1.2 equivalents of PhB(OH)₂, 0.6 mol% of an *in situ* generated catalyst from Rh(acac)(C₂H₄)₂ and 1.5 mol% of MonoPhos. Complete conversion was achieved at 100 °C after 1 h. The product was isolated in 92% yield and had an e.e. of 85%.

This experiment shows that because of the high rate of the reaction a much lower PhB(OH)₂ / olefin ratio can be used than in the work of Hayashi et al. where 5 equivalents are used.

### Comparative Experiment

For comparison, Example 1 was repeated with the ligands reported by Hayashi (BINAP) and with the ligand reported by Reetz (Phosphonite). The rate of the three reactions is depicted graphically in Figure 1. From this it is clear that under the same conditions according to the invention a much faster reaction is obtained.

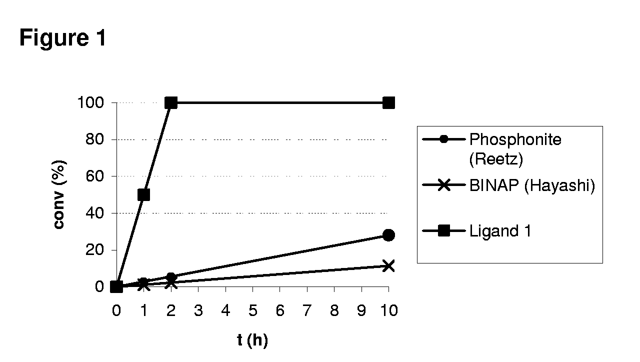

## Claims

1. Process for the preparation of enantiomerically enriched compounds with formula Ar - C(R¹) - C(R²) - Z wherein Ar represents an optionally substituted (hetero)aryl group, R¹ and R², each independently, represent H, an alkyl, (hetero)aryl, dialkylamino, amido, thioether, alkoxy or aryloxy group with the proviso that not both R¹ and R² represent H, or R¹ and R² form together with the C-atoms to which they are bound a (hetero)alkyl or (hetero) alkenyl ring and Z represents an electron withdrawing group, in which process a boronic acid derivate of formula Ar - B(OR³)OR⁴ or its anhydride, wherein Ar is the same as described above and R³ and R⁴, each independently, represent H or an alkyl group, is reacted with an olefinic unsaturated compound with formula R² - C = C - (R¹)Z, wherein R¹, R² and Z are the same as described above, in the presence of a transition metal catalyst comprising a transition metal chosen from the group consisting of Cu and group VIII of the Periodic Table and an enantiomerically enriched ligand L, **characterized in that** L is an enantiomerically enriched ligand having the formula (I) 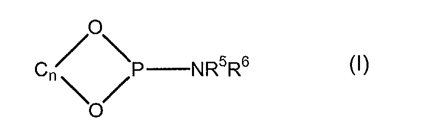 where Cₙ together with the two O-atoms and the P-atom forms a substituted or non-substituted ring with 2-6 C-atoms, R⁵ and R⁶ each independently stand for H, an optionally substituted alkyl, aryl, alkaryl or aralkyl group, or represent the group with formula (II) 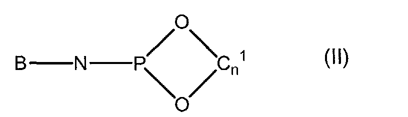 wherein Cₙ¹ may have the same meanings as given for Cₙ and B represents a bridging group, or R⁵ and R⁶ may form a heterocyclic ring together with the N-atom to which they are bound.

2. Process according to claim 1, wherein the transition metal is Rh.

3. Process according to claim 2, wherein the transition metal catalyst is prepared using Rh (H₂C = CH₂)₂ acetylacetonate as a catalyst precursor.

4. Process according to any one of claims 1-3 where Cₙ stands for a chiral C4 chain that substantially has one particular configuration.

5. Process according to claim 4, where Cₙ together with the two O-atoms and the P-atom forms a ring with 4 C-atoms which 2 by 2 form part of an aryl group or a naphthyl group.

6. Process according to any one of claims 1-5 wherein R⁵ and R⁶ each independently represent an alkyl group.

7. Process according to claim 6 wherein R⁵ and R⁶ both represent a methyl group.

8. Process according to any one of claims 1-7 in which the reaction is carried out in the presence of a mixture of dioxane and water.

9. Process according to any one of claims 1-7 in which the reaction is carried out in the presence of an ionic liquid.

10. Process according to any one of claims 1-9 in which the catalyst is prepared in situ.

11. Process according to any one of claims 1-10, wherein first ArMgBr, wherein Ar is as defined above, and a boron ester or B(OR)₃, wherein R represents an alkyl group are reacted to form the boronic acid derivative, and wherein subsequently, without intermediate purification or isolation, the boronic acid derivative is subjected to reaction with the olefinic unsaturated compound with formula R²-C=C-(R¹)Z.

12. Catalyst comprising a transition metal M, an enantiomerically enriched ligand L, an extra ligand S and a counterion X wherein M is Rh, S is (C₂H₄)₂, X is acetylacetonate and L is a ligand with formula I 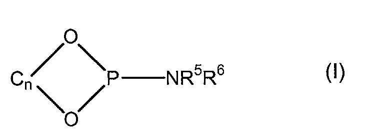 where Cₙ together with the two O-atoms and the P-atom forms a substituted or non-substituted ring with 2-6 C-atoms, R⁵ and R⁶ each independently stand for H, an optionally substituted alkyl, aryl, alkaryl or aralkyl group, or represent the group with formula (II) 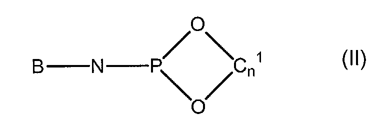 wherein Cₙ¹ may have the same meanings as given for Cₙ and B represents a bridging group, or R⁵ and R⁶ may form a heterocyclic ring together with the N-atom to which they are bound.
